Europäisches Patentamt

European Patent Office

Office européen des brevets

(11) Publication number: **0 300 673 B1**

(12) **EUROPEAN PATENT SPECIFICATION**

(45) Date of publication of patent specification: **20.10.93**  (51) Int. Cl.⁵: **G05D 13/62**, F02C 9/28

(21) Application number: **88306387.7**

(22) Date of filing: **13.07.88**

(54) **Closed loop control system.**

(30) Priority: **22.07.87 GB 8717287**

(43) Date of publication of application:
**25.01.89 Bulletin 89/04**

(45) Publication of the grant of the patent:
**20.10.93 Bulletin 93/42**

(84) Designated Contracting States:
**DE FR GB IT**

(56) References cited:
**EP-A- 0 185 600
GB-A- 1 386 401
GB-A- 2 121 986
US-A- 4 321 791**

(73) Proprietor: **LUCAS INDUSTRIES public limited
company
Great King Street
Birmingham, B19 2XF West Midlands(GB)**

(72) Inventor: **Janes, Roderick Stewart
147 Castle Lane
Olton
Solihull West Midlands B92 8RW(GB)**

(74) Representative: **Cuddon, George Desmond et
al
MARKS & CLERK
Alpha Tower
Suffolk Street Oueensway
Birmingham B1 1TT (GB)**

Rank Xerox (UK) Business Services
(3.10/3.6/3.3.1)

## Description

This invention relates generally to closed loop control systems, but is particularly applicable to closed loop gas-turbine engine control systems.

Closed loop control systems are frequently found to have their "large-signal" response prejudiced by the presence of inaccessible or unobservable non-linearities within the controlled apparatus or the control system elements. The invention aims generally to improve the trajectory of the large-signal response in such systems.

In particular a problem has been noted in gas turbine control systems when deceleration of an engine is demanded followed by a demand for acceleration. If a speed demand signal which is supplied to a fuel controller is reduced, conventional range speed and deceleration control systems may cause the speed of the engine to overshoot, that is to fall below the new demanded value. Overshoot results from effects such as controller and fuel system saturation or even slope reversal characteristics which may be encountered with large scale demand changes, to an extent which is variable with states of wear and calibration. If, at "boundary" operating conditions, reacceleration is demanded before the system has recovered from the overshoot, a so-called re-acceleration surge can occur.

Further, it is also possible that transient increases in the supply of fuel during the final stages of the deceleration may give rise to unstable compressor airflow conditions and subsequent acceleration surge, notwithstanding the success of the control system in preventing overshoot of the actual demanded speed.

It has been proposed to overcome this problem by causing changes in the demanded speed to follow a trajectory defined by a finite number of ramps at discretely reducing rates over a period of time instead of as a single large initial step. Such an arrangement has the disadvantage, however, that the rates of decrease of demand must be predetermined, whereas the dynamic response of the engine may vary markedly according to operating conditions. The predetermined rates of change of demand must therefore be selected to allow for "worst case" conditions, which means that in better conditions deceleration is accomplished more slowly that it could be. A second disadvantage is that, for conditions where the engine is able to decelerate more rapidly than the case for which the trajectory is set, any increases in fuel flow during deceleration will not tend to be suppressed.

It might be possible to overcome these disadvantages by using various detectors to measure the conditions which give rise to changes in the dynamic response and modify the rates of change of demand appropriately, but this would lead to great complication in the control system.

The invention sets out to provide a control system in which these disadvantages are avoided in a simple and effective manner.

In accordance with a broad aspect of the invention, there is provided a closed loop control system comprising a controller which varies an input to an apparatus having a transducer which can provide an output determined by a controlled variable of the apparatus, a demand input device and control means for controlling a demand signal applied to said controller to vary said input in accordance with a signal from said demand input device and said output, said control means including rate limiting control means for limiting the rate of change of said demand signal, and overriding means for overridingly increasing the limited rate of change of said demand signal when the corresponding rate of change of said output is more rapid than the change in output required by the rate-limited demand signal, by substituting a signal derived from said output for the rate-limited demand signal.

In the case of a gas turbine engine fuel control, said apparatus is the engine, the controller is a fuel control, said demand signal is a speed demand signal and the output corresponds to the running speed of a spool of the engine, said control means operating to control deceleration of the engine.

Preferably, the fuel control further comprises non-linear filter means controlled by the error between a signal produced by the demand input device and the output speed signal from said transducer, the filter means permitting a filtered speed signal to follow the actual speed signal more rapidly when the speed error is greatest, said filtered speed signal being the signal which is substituted as aforesaid for the demand signal derived by taking said limited rate of change into account.

In the accompanying drawings:-

Figure 1 is a block diagram showing a control system in accordance with the invention and

Figure 2 is a block diagram of a filter control forming part of the example shown in Figure 1.

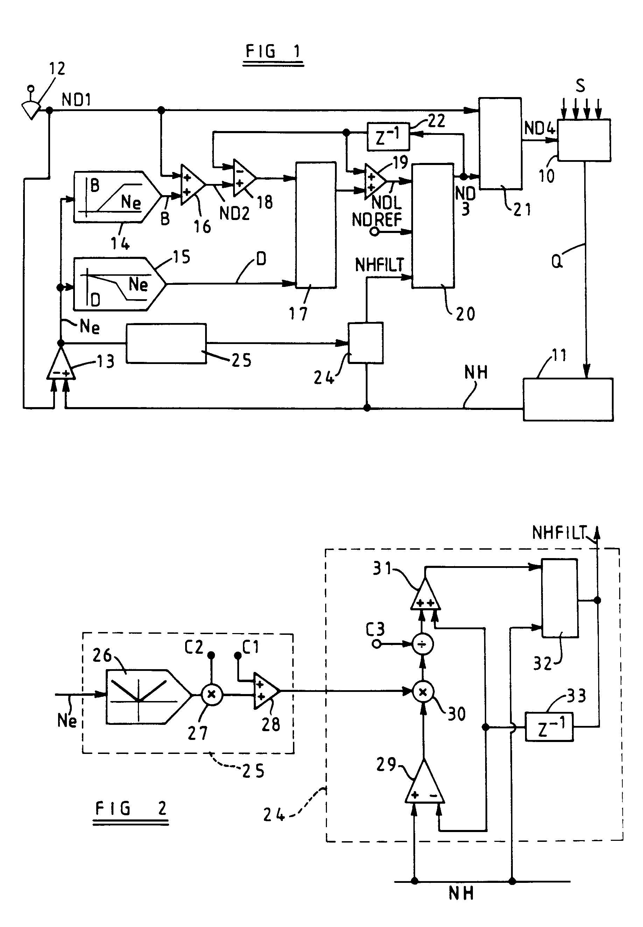

Referring firstly to Figure 1 a fuel control 10 receives a speed demand signal ND4 as well as signals S corresponding to other control parameters and controls the rate Q of fuel flow to the engine 11. A transducer incorporated in the engine provides an output signal NH which represents the speed of one of the spools of the engine. The present invention is concerned purely with a control loop which controls this speed demand signal ND4 and the many other control loops which may be included and which may, on occasion, override the speed control loop, are ignored.

A basic engine speed demand signal ND1 is derived from a pilot's control 12. This signal ND1 may be presumed to have the same value that the signal NH from the speed transducer will have when the engine is running at the desired speed.

An error signal generating means comprises a subtractor 13 having the signals ND1 and NH as its inputs. The output Ne of this difference means 13 is applied as input to two function generators 14, 15 having transfer characteristics as shown in the graphs depicted on them in the drawing. The function generator 14 provides a bias output signal B which is zero up to a threshold value of the input, thereafter generally rising as the input rises; the simplest form being a straight line of unit slope, becoming zero slope at some high level of input. The bias signal B is added to the ND1 value in an adder 16 to provide a signal ND2.

The function generator 15 provides a rate signal D which determines maximum rates of decrease of the demand signal ND4 fed to the control 10 during rapid deceleration. The rate signal D is near to zero when the speed error Ne is zero, decreases over a first range of the error signal, decreases at greater slope over a second range of the error signal, then remains at a constant level. The rate signal D is applied to one input of a first high wins gate 17. The other input of the gate 17 is the output of a second error generating means comprised by a subtractor 18 which is responsove to a first feedback signal and to the output of the adder 16. The output of the high wins gate 17 is applied to an adder 19 which adds the output of gate 17 to the aforesaid feedback signal and the resultant sum signal NDL is applied to an input of a low wins gate 20 to which there is also applied a filtered signal NHFILT derived from the positive NH signal. Also applied to the gate 20 is a positive reference signal NDREF representing the value of ND1 above which the other input signals to gate 20 shall have no effect. The output ND3 of the low wins gate 20 is applied to one input of a final high wins gate 21 and also provides the aforesaid feedback signal via a sample-and-hold memory 22 which holds the last value of the output of gate 20 (the system operating cyclically rather than continuously). The other input of gate 21 is the ND1 signal and the output thereof provides the final demand signal ND4 to the fuel control.

The filtered signal NHFILT is derived from a filter 24, which is shown in detail in Figure 2 and is responsive to a signal from a control 25, also shown in Figure 2.

The elements 14 to 19, and the feedback signal through the sample-and-hold memory 22 together form a means for limiting the rate of change of the demand signal ND4. The maximum change of the output of gate 20, in the reducing sense, per cycle of operation of the sample-and-hold process, is the value of the signal D from the function generator 15. It is known to produce the function of rate limiting with controllable rate and controllable output limiting by this method, as well as by constructions employing resistors, capacitors, amplifiers and diodes only - i.e. without the use of a sample-and-hold, which is not essential to this invention, but facilitates a step by step description of its functioning.

Ignoring the filter unit 24 and also the contribution of NHFILT signal on gate 20, for the time being, the system operates as follows:

In steady state, when NH is equal to ND1 and ND1 exceeds NDREF, the output of subtractor 13 is zero, so the output of function generator 14 is zero, the input ND2 to the part of the rate of change limiting means formed by elements 18, 17, 19, 22 is equal to ND1. The output NDL of the adder 19 corresponds to the output ND3 of gate 20 and may not rise above NDREF, and accordingly is equal to NDREF, as is the feedback signal through the sample-and-hold memory 22. Accordingly the output of subtractor 18 is positive and therefore prevails in gate 17, because the output from function generator 15 is always negative. The output NDL of adder 19 is equal to ND2, therefore equal to ND1, which cannot prevail in gate 20. ND4 is thus equal to ND1 also. Furthermore, whether in steady conditions or not, as long as ND1 exceeds NDREF, the latter prevails in gate 20 and ND4 is equal to ND1. This is clear when it is considered that function generator 14 can produce only zero or positive output.

Consider, for illustrative purposes, a step reduction of ND1 from the steady conditions described in the preceding paragraph. It may be assumed that initially NH does not change, so the output of subtractor 13 becomes, stepwise, positive, as does the output of function generator 14. The output of adder 16, ND2, is a step reduction, but not as large as that of ND1, because of the added positive bias from function generator 14. If ND1 still exceeds NDREF, ND4 remains equal to ND1.

Suppose, however, that the step down in ND1 is to a final value below NDREF. If ND2 which equals ND1 plus the bias from function generator 14 is above NDREF the output of subtractor 18 remains positive, prevails in gate 17 and is added to NDREF from the device 22 by adder 19 whose rate-limited output NDL, being greater than NDREF, thus loses at gate 20, whose output ND3 is therefore still NDREF. Consequently ND4 becomes equal to NDREF since ND1 no longer exceeds ND3 and so wins gate 21. Thus, as ND1 is stepped down, the bias function may cause the resultant demand to become at most NDREF.

Suppose now that the step down in ND1 is to a value very much below NDREF, such that ND2 is now lower than the prevailing value of the feedback signal from the memory 22, which will be NDREF. The output of subtractor 18 is now negative. A negative value will thus be output from gate 17, whatever the relative values of the signals from subtractor 18 and the function generator 15.

Addition of such a negative value to the feedback signal in adder 19 produces a rate-limited output NDL lower than NDREF, so this prevails in gate 20 and the output ND3 is reduced, from NDREF to a lower value. If the output of subtractor 18 had won in gate 17, that is was the less negative value, it is clear that the subtraction in 18 and the addition in 19 exactly cancel and the output NDL of adder 19 is exactly ND2, which thus becomes the new value for ND3 and also for ND4. In this case, the rate signal D has not been invoked.

If, however, the output D of the rate limit function generator 15 had prevailed at gate 17, that is when there is a "large signal" step change of ND1, the output NDL of adder 19 becomes a value lower than NDREF, yet higher than ND2, and further sequential operations of the sample-and-hold 22 cause successive further reductions of ND3 until it becomes exactly equal to ND2. In this latter case the rate limiting action is invoked in reducing ND3 and the resultant demand ND4 to the value of ND2. The demand ND4 thus tends to the value ND2 = ND1 + B. ND2 can never get down to ND1 if the demand ND4 is considered as "open loop", that is if changes in NH are ignored.

Thus far it has been supposed that NH does not change. Consider now that NH begins to reduce in response to the step reductions in ND1 and hence in ND4. Typically the rate of change of NH will be controlled either explicitly or indirectly by a deceleration control which is considered to be embodied in the control 10. It may be assumed therefore that the typical response of NH to any substantial sudden reduction in demand ND4 can reasonably be approximated as a ramp function. It is not essential to this invention that it should be so, but such a response is often designed for and achieved in practice.

For example a deceleration ramp may be predetermined in the control 10. NH will respond to this ramp within the fuel control system, and begin to reduce accordingly. This ramp is used to design the functions in function generators 14 and 15 to match them approximately to the expected behaviour of NH as it is reduced.

For an initially high value of NH (compared with the step-reduced value ND1) the outputs of function generators 14 and 15 remain constant as NH begins to fall. As NH reduces, the positive error output Ne of subtractor 13 reduces, eventually causing a reduction in the bias B output from function generator 14 and thus reduction of the value of ND2. As has been shown in the foregoing paragraphs, ND3 tends to the value of ND2 but is contrained in its rate of reduction by the rate limit output from function generator 15. As the error output Ne from 13 decreases the permitted rate of ND3 reduction decreases towards zero, but nevertheless remains finite. Over the range where the functions of function generators 14 and 15 are linear and respectively positively and negatively sloped, the particular idealisation of ramp NH response gives rise to rampwise reduction of ND2 together with rampwise reduction of the decrease rate of ND3 and hence ND4. This can be shown algebraically to give rise to a time trajectory for ND3 and ND4 which is a negative exponential decay curve. Other non-analytic trajectories for NH of course give other non-analytic but always curved trajectories for the resultant demand ND4 since any continuous variation of NH gives rise to continuous variation of the rate limit output from 15 and hence the slope of the time trajectory of ND3.

Should NH be forced by some external influence to remain constant for a period while still somewhat above the demand ND1 the value of signal ND3 and hence of ND4 will reduce only to the value of ND2, which is in general biased to be above ND1, and yet below NH.

Should the NH signal consistently fall lower than the rate-limited output NDL of adder 19 for some time, that is if NH reduces more quickly than anticipated in the design of 14 and 15 the NHFILT signal will prevail in gate 20 and the schedule is adjusted to prevent overfuelling.

Turning now to figure 2, the filter 24 and filter control 25 are shown in detail. It is essential that the value of NH is filtered.

Assume initially that NHFILT is equal to NH. Any tendency for NH to fall below ND4 would cause ND3 to become equal to NH. The demand signal ND4 would track NH with only the unit process delay of 40mS producing a small restoring tendency within the system, proportional only to the rate of change of NH, normal proportional NH feedback having been totally supressed. This almost totally adapts the trajectory of ND4 to that of NH, and is impractical even from the point of view of the effects of noise on the NH signal. It is necessary to provide significantly more "restoring" tendency for the approach control to have any useful effect in these circumstances.

The filter 24 which generates NHFILT from NH is non-linear; it is used to provide a means for controlling the degree of adaptation of changes in ND4 to corresponding change in NH, so that the demand ND4 is neither totally rigid nor totally (and uselessly) compliant, and to protect ND4 from the effects of NH noise.

The filter control 25 includes means 26 for generating an absolute value which is responsive to the speed error signal Ne from the subtractor 13. The output of generator means 26 is scaled by a factor $C_2$ to an appropriate level by a multiplier 27 and the scaled signal has a minimum value $C_1$ added to it in an adder 28.

The filter 24 has an input differencing means 29 which receives as one input the NH signal, and as another input a second feedback signal. The output of differencing means 29 is applied to a multiplier 30 where it is multiplied by the output of the filter control 25. The output of the multiplier 30 is divided by a scaling factor $C_3$ and applied to an adder 31 where it is added to the second feedback signal. The signal NH and the sum signal from adder 31 are applied to a high wins gate 32 the output of which is applied to the gate 20 and also to a memory 33 which is refreshed cyclically like the memory 22; the output of memory 33 provides the second feedback signal.

The filter 24 therefore uses an integrator whose gain varies with the speed error Ne with high integrating gain so that NHFILT follows NH closely when Ne is large. As NH approaches the pilot's demand value and Ne therefore approaches zero the integrating gain falls to a lower limiting value and so decreases the sensitivity of NHFILT to the falling value of NH, and thereby increases the damping effect to a maximum. Furthermore a minimum limit of NH is applied to NHFILT by the gate 32 within the integrating loop, which constrains NHFILT to follow NH without error when NH is rising and would tend otherwise to exceed NHFILT. The filter response is thus also asymmetrical, the tracking error (NH - NHFILT) being always negative or zero.

The filter 24 and the gate 20 thus provide means for overriding the signal NDREF and the signal from the adder 19, to increase the rate of change of ND4 when a corresponding rate of change of NH would otherwise be such as to cause NH to fall below ND4.

The increase of filter factor, that is the reciprocal of filter gain, with reducing speed error Ne is basically what ensures that NHFILT tracks only slightly above actual NH on decelerations. As Ne approaches zero the tendency for a fall in NH to cause a depression in the values of ND4, is progressively suppressed, which means that the NH4 values are more susceptible to adjustment by NHFILT earlier in the approach to the desired value of NH, when there is scope for some such downward adjustment, than later when the demand trajectory is close to the final value.

**Claims**

1. A closed loop control system comprising a controller (10) which varies an input (Q) to an apparatus (11) which can provide an output (NH) determined by a controlled variable of the apparatus (11), a demand input device (12), and control means for controlling a demand signal (ND4) applied to said controller (10) to vary said input (Q) in accordance with a signal (ND1) from said demand input device (12) and said output (NH), said control means including a rate limiting control means (14-19) for limiting the rate of change of said demand signal (ND4), and characterised in that the control means further includes overriding means (20, 24) for overridingly increasing the limited rate of change of said demand signal (ND4) when a corresponding rate of change of said output (NH) is more rapid than the change in said output (NH) required by the rate-limited demand signal (ND4), by substituting a signal (NHFILT) derived from said output (NH) for the rate-limited demand signal (ND4).

2. A system as claimed in Claim 1 in which said overriding means comprises means (24) for generating a filtered signal (NHFILT) derived from said output (NH), and first selector means (20) responsive to the relative magnitudes of input signals supplied thereto, said filtered signal (NHFILT) forming one input of said selector means (20).

3. A system as claimed in Claim 2 in which said first selector means (20) is a low-wins gate to which a rate-limited demand value (NDL) is supplied, said rate-limited demand signal (ND4) being derived from said demand value (NDL).

4. A system as claimed in claims 2 or 3 in which said filtered signal (NHFILT) is responsive to a difference between the magnitudes of said output (NH) and a signal (NDI) from said demand input device (12).

5. A system as claimed in claims 2 to 4 in which the signal (NHFILT) derived from said output (NH) is applied to said first selector means (20).

6. A system as claimed in any preceding claim in which said apparatus (11) is a gas turbine engine, said input (Q) to the apparatus (11) is a fuel flow rate, said demand signal (ND4) is a speed demand signal and said output (NH) corresponds to the running speed of a spool of the engine, said control means (14-19) operating to control deceleration of the engine.

**Patentansprüche**

1. Steuerungssystem mit geschlossenem Regelkreis mit einer Steuerung (10), die ein Eingangssignal (Q) für ein Gerät (11) verändert, wobei das Gerät (11) ein Ausgangssignal (NH) liefern kann, das durch eine gesteuerte variable des Geräts (11) bestimmt ist, einer Sollwerteingabevorrichtung (12) und einer Steuereinrichtung zum Steuern eines an die Steuerung (10) angelegten Sollwertsignals (ND4) zum Verändern des Eingangssignals (Q) gemäß einem Signal (ND1) von der Sollwerteingabevorrichtung (12) und dem Ausgangssignal (NH), wobei die Steuereinrichtung eine Ratenbegrenzungssteuereinrichtung (14 - 19) zum Begrenzen der Änderungsrate des Sollwertsignals (ND4) umfaßt, dadurch gekennzeichnet, daß die Steuereinrichtung eine Überlagerungseinrichtung (20, 24) umfaßt, die die begrenzte Änderungsrate des Sollwertsignals (ND4) durch Überlagerung erhöht, wenn eine entsprechende Änderungsrate des Ausgangssignals (NH) größer als die für das ratenbegrenzte Sollwertsignal (ND4) erforderliche Ausgangssignaländerung ist, indem sie das ratenbegrenzte Sollwertsignal durch ein vom Ausgangssignal (NH) abgeleitetes Signal (NHFILT) ersetzt.

2. System nach Anspruch 1, dadurch gekennzeichnet, daß die Überlagerungseinrichtung eine Einrichtung (24) zum Erzeugen eines vom Ausgangssignal (NH) abgeleiteten gefilterten Signals (NHFILT) und eine erste Wähleinrichtung (20) umfaßt, wobei die Wähleinrichtung auf die relativen Größen der zugeführten Eingangssignale reagiert und das gefilterte Signal (NHFILT) ein Eingangssignal der Wähleinrichtung (20) ist.

3. System nach Anspruch 2, dadurch gekennzeichnet, daß die erste Wähleinrichtung (20) ein Minimalwertgatter ist, dem ein ratenbegrenzter Sollwert (NDL) zugeführt wird, wobei das ratenbegrenzte Sollwertsignal (ND4) von dem Sollwert (NDL) abgeleitet wird.

4. System nach Anspruch 2 oder 3, dadurch gekennzeichnet, daß das gefilterte Signal (NHFILT) auf eine Differenz zwischen den Größen des Ausgangssignals (NH) und eines Signals (NDI) von der Sollwerteingabevorrichtung (12) reagiert.

5. System nach einem der Ansprüche 2 bis 4, dadurch gekennzeichnet, daß das vom Ausgangssignal (NH) abgeleitete Signal (NHFILT) an der ersten Wähleinrichtung (20) anliegt.

6. System nach einem der vorhergehenden Ansprüche, dadurch gekennzeichnet, daß das Gerät (11) eine Gasturbinenkraftmaschine ist, daß das Eingangssignal (Q) für das Gerät (11) eine Brennstoffflußrate ist, daß das Sollwertsignal (ND4) ein Geschwindigkeitssollwertsignal ist und daß das Ausgangssignal (NH) der Laufgeschwindigkeit eines Rades der Kraftmaschine entspricht, wobei die Steuereinrichtung (14 - 19) wirksam ist, um die Bremsung der Kraftmaschine zu steuern.

**Revendications**

1. Système de commande en boucle fermée comprenant un contrôleur (10) qui fait varier une entrée (Q) dans l'appareil (11) qui produit une sortie (NH) déterminée par une variable commandée de l'appareil (11), un dispositif d'entrée de demande (12) et un moyen de commande pour commander un signal de demande (ND4) appliqué audit contrôleur (10) afin de faire varier ladite entrée (Q) en relation avec un signal (ND1) en provenance dudit dispositif d'entrée de demande (12) et avec ladite sortie (NH), ledit moyen de commande incluant un moyen de commande de limitation de taux (14-19) pour limiter le taux de variation dudit signal de demande (ND4) et caractérisé en ce que le moyen de commande inclut en outre un moyen de priorité (20, 24) pour augmenter de façon prioritaire le taux de variation limité dudit signal de demande (ND4) lorsqu'un taux de variation correspondant de ladite sortie (NH) est plus rapide que la variation de ladite sortie (NH) exigée par le signal de demande limité en taux (ND4), en substituant un signal (NHFILT) dérivé de ladite sortie (NH) au signal de demande limité en taux (ND4).

2. Système selon la revendication 1, dans lequel ledit moyen de priorité comprend un moyen (24) pour générer un signal filtré (NHFILT) dérivé de ladite sortie (NH) et un premier moyen de sélecteur (20) sensible aux amplitudes relatives de signaux d'entrée qui lui sont appliqués, le signal filtré (NHFILT) formant une entrée dudit moyen de sélecteur (20).

3. Système selon la revendication 2, dans lequel ledit premier moyen de sélecteur (20) est une porte à sortie commutée à l'entrée de niveau bas à laquelle une valeur de demande limitée en taux (NDL) est appliquée, ledit signal de demande limité en taux (ND4) étant dérivé de ladite valeur de demande (NDL).

4. Système selon la revendication 2 ou 3, dans lequel ledit signal filtré (NHFILT) est sensible à la différence entre les amplitudes de ladite sortie (NH) et d'un signal (NDI) en provenance dudit dispositif d'entrée de demande (12).

5. Système selon les revendications 2 à 4, dans lequel le signal (NHFILT) dérivé de ladite sortie (NH) est appliqué audit premier moyen de sélecteur (20).

6. Système selon l'une quelconque des revendications précédentes, dans lequel ledit appareil (11) est un moteur à turbine à gaz, ladite entrée (Q) de l'appareil (11) est un débit de carburant, ledit signal de demande (ND4) est un signal de demande de taux et ladite sortie (NH) correspond à la vitesse d'une élément mobile du moteur, ledit moyen de commande (14-19) fonctionnant pour commander la décélération du moteur.

FIG 1

FIG 2